# EUROPEAN PATENT APPLICATION

(11) **EP 4 648 468 A1**
(43) Date of publication of application: **12.11.2025**
(21) Application number: 24753709.5
(22) Date of filing: 07.02.2024
(51) Int. Cl.: H04W 24/08, H04W 24/10, H04W 36/00, H04W 76/28

(54) **METHOD AND APPARATUS FOR SUPPORTING RRM MEASUREMENT OPERATION IN COMMUNICATION SYSTEM**

(30) Priority: 10.02.2023 KR 20230018290
(71) Applicant: Samsung Electronics Co., Ltd., Suwon-si, Gyeonggi-do 16677 (KR)
(72) Inventor: KIM, Sangbum, Suwon-si, Gyeonggi-do 16677 (KR); AGIWAL, Anil, Suwon-si, Gyeonggi-do 16677 (KR)
(74) Representative: Gulde & Partner
(86) International application number: PCT/KR2024/095097
(87) International publication number: WO 2024/167388

(57) **Abstract**

The present disclosure relates to a 5G or 6G communication system for supporting higher data transmission rates. A method performed by a terminal in a communication system according to an embodiment of the present disclosure comprises: receiving configuration information related to a measurement report; identifying a first time period on the basis of the configuration information; and transmitting the measurement report in the case that an event that triggers the measurement report is satisfied during the first time period.

## Description

### [Technical Field]

The disclosure may relate to operations of a terminal and a base station in a communication system.

### [Background Art]

5G mobile communication technology defines a wide frequency band to enable a fast transmission speed and new services, and may be implemented not only in a frequency ('sub 6 GHz') band of 6 GHz or less such as 3.5 GHz, but also in an ultra high frequency band ('above 6 GHz') called a mmWave such as 28 GHz and 39 GHz. Further, in the case of 6G mobile communication technology, which is referred to as a beyond 5G system, in order to achieve a transmission speed that is 50 times faster than that of 5G mobile communication technology and ultra-low latency reduced to 1/10 compared to that of 5G mobile communication technology, implementations in terahertz bands (e.g., such as 95 GHz to 3 terahertz (3 THz) band) are being considered.

In the early days of 5G mobile communication technology, with the goal of satisfying the service support and performance requirements for an enhanced mobile broadband (eMBB), ultra-reliable low-latency communications (URLLC), and massive machine-type communications (mMTC), standardization has been carried out for beamforming and massive multi-input multi-output (MIMO) for mitigating a path loss of radio waves in an ultra-high frequency band and increasing a propagation distance of radio waves, support for various numerologies (multiple subcarrier spacing operation, and the like) for efficient use of ultra-high frequency resources and dynamic operation for slot formats, initial access technology for supporting multi-beam transmission and broadband, a definition and operation of a band-width part (BWP), a new channel coding method such as low density parity check (LDPC) code for large capacity data transmission and polar code for high reliable transmission of control information, L2 pre-processing, and network slicing that provides a dedicated network specialized for specific services.

Currently, discussions are ongoing to improve initial 5G mobile communication technology and enhance a performance thereof in consideration of services in which 5G mobile communication technology was intended to support, and physical layer standardization for technologies such as vehicle-to-everything (V2X) for helping driving determination of an autonomous vehicle and increasing user convenience based on a location and status information of the vehicle transmitted by the vehicle, new radio unlicensed (NR-U) for the purpose of a system operation that meets various regulatory requirements in unlicensed bands, NR UE power saving, a non-terrestrial network (NTN), which is direct UE-satellite communication for securing coverage in regions where communication with a terrestrial network is impossible, and positioning is in progress.

Further, standardization in the field of air interface architecture/protocol for technologies such as industrial Internet of things (IIoT) for supporting new services through linkage and convergence with other industries, integrated access and backhaul (IAB) that provides nodes for expanding network service regions by integrating wireless backhaul links and access links, mobility enhancement including conditional handover and dual active protocol stack (DAPS) handover, and 2-step RACH for NR that simplifies a random access procedure is also in progress, and standardization in the system architecture/service field for 5G baseline architecture (e.g., service based architecture, service based interface) for applying network functions virtualization (NFV) and software-defined networking (SDN) technologies, mobile edge computing (MEC) that receives services based on a location of a UE, and the like is also in progress.

When such a 5G mobile communication system is commercialized, connected devices in an explosive increase trend will be connected to communication networks; thus, it is expected that function and performance enhancement of a 5G mobile communication system and integrated operation of connected devices will be required. To this end, new research on eXtended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, and drone communication will be conducted.

Further, the development of such a 5G mobile communication system will be the basis for the development of full duplex technology for improving frequency efficiency and system network of 6G mobile communication technology, satellite, artificial intelligence (AI)-based communication technology that utilizes AI from a design stage and that realizes system optimization by internalizing end-to-end AI support functions, and next generation distributed computing technology that realizes complex services beyond the limits of UE computing capabilities by utilizing ultra-high performance communication and computing resources as well as a new waveform for ensuring coverage in a terahertz band of 6G mobile communication technology, full dimensional MIMO (FD-MIMO), multi-antenna transmission technologies such as an array antenna and large scale antenna, metamaterial-based lenses and antennas for improving coverage of terahertz band signals, high-dimensional spatial multiplexing technology using orbital angular momentum (OAM), and reconfigurable intelligent surface (RIS) technology.

### [Disclosure of Invention]

### [Technical Problem]

The disclosure provides a device and method capable of effectively providing a service in a communication system.

The disclosure may provide a method and device for supporting a radio resource management (RRM) measurement operation in a communication system.

Technical problems to be achieved in the disclosure are not limited to the above-described technical problems, and other technical problems that are not described may be considered by those skilled in the art from various embodiments of the disclosure to be described below.

### [Solution to Problem]

According to an embodiment of the disclosure, a method performed by a terminal in a communication system may be provided.

According to an embodiment of the disclosure, the method may include receiving configuration information related to a measurement report; identifying a first time period based on the configuration information; and transmitting, in the case that an event that triggers the measurement report is satisfied during the first time period, the measurement report.

According to an embodiment of the disclosure, the event may be related to measurement of a downlink signal.

According to an embodiment of the disclosure, in the case that information related to a second time period that may receive the downlink signal is received, the first time period may be included in the second time period.

According to an embodiment of the disclosure, the configuration information may include information on a plurality of time periods.

According to an embodiment of the disclosure, the first time period may be (i) a longest time period or (ii) a time period determined by the terminal among one or more time periods having a length less than or equal to the second time period among the plurality of time periods.

According to an embodiment of the disclosure, the configuration information may include information on a plurality of scale factors and information on a specific time period.

According to an embodiment of the disclosure, the first time period may be (i) a longest time period or (ii) a time period determined by the terminal among a plurality of time periods to which the plurality of scale factors are applied to the specific time period.

According to an embodiment of the disclosure, the first time period may be identified so as not to overlap with a third time period during which reception of the downlink signal is not possible.

According to an embodiment of the disclosure, in the case that a specific time period for the first time period overlaps with the third time period, the first time period may be identified as the specific time period with the third time period excluded, and the measurement report may be transmitted when a transition occurs from the third time period to the second time period.

According to an embodiment of the disclosure, in the case that the specific time period overlaps with the third time period, the first time period may be reserved while the specific time period overlaps with the third time period, and include at least a portion of the second time period transitioned during the third time period.

According to an embodiment of the disclosure, the second time period may be an active time of cell discontinuous transmission (DTX), and the third time period may be a non-active time of the cell DTX.

According to an embodiment of the disclosure, the cell DTX may be activated by dynamic signaling.

According to an embodiment of the disclosure, the downlink signal may be a downlink signal of the first cell, and the event may be configured for the first cell.

According to an embodiment of the disclosure, during a time period within the first time period in which reception of a downlink signal from the first cell is not possible, the event configured for the first cell may be based on measurement of a downlink signal from a second cell different from the first cell.

According to an embodiment of the disclosure, the first cell and the second cell may be included in the same cell group (CG).

According to an embodiment of the disclosure, a terminal in a communication system may be provided.

According to an embodiment of the disclosure, the terminal may include a transceiver; and a processor connected to the transceiver.

According to an embodiment of the disclosure, the processor may be configured to receive configuration information related to a measurement report; to identify a first time period based on the configuration information; and to transmit the measurement report, if an event that triggers the measurement report is satisfied during the first time period.

According to an embodiment of the disclosure, the event may be related to measurement of a downlink signal.

According to an embodiment of the disclosure, in the case that information related to a second time period that may receive the downlink signal is received, the first time period may be included in the second time period.

According to an embodiment of the disclosure, the configuration information may include information on plurality of time periods.

According to an embodiment of the disclosure, the first time period may be (i) a longest time period or (ii) a time period determined by the terminal among one or more time periods having a length less than or equal to the second time period among the plurality of time periods.

According to an embodiment of the disclosure, the configuration information may include information on plurality of scale factors and information on a specific time period.

According to an embodiment of the disclosure, the first time period may be (i) a longest time period or (ii) a time period determined by the terminal among a plurality of time periods to which the plurality of scale factors are applied to the specific time period.

According to an embodiment of the disclosure, the first time period may be identified so as not to overlap with a third time period during which reception of the downlink signal is not possible.

According to an embodiment of the disclosure, in the case that a specific time period for the first time period overlaps with the third time period, the first time period may be identified as the specific time period with the third time period excluded, and the measurement report may be transmitted when a transition occurs from the third time period to the second time period.

According to an embodiment of the disclosure, in the case that the specific time period overlaps with the third time period, the first time period may be reserved while the specific time period overlaps with the third time period, and include at least a portion of the second time period transitioned during the third time period.

According to an embodiment of the disclosure, the second time period may be an active time of cell discontinuous transmission (DTX), and the third time period may be a non-active time of the cell DTX.

According to an embodiment of the disclosure, the cell DTX may be activated by dynamic signaling.

According to an embodiment of the disclosure, the downlink signal may be a downlink signal of the first cell, and the event may be configured for the first cell.

According to an embodiment of the disclosure, during a time period within the first time period in which reception of a downlink signal from the first cell is not possible, the event configured for the first cell may be based on measurement of a downlink signal from a second cell different from the first cell.

According to an embodiment of the disclosure, the first cell and the second cell may be included in the same cell group (CG).

According to an embodiment of the disclosure, a method performed by a base station in a communication system may be provided.

According to an embodiment of the disclosure, the method may include transmitting configuration information related to a measurement report; and receiving the measurement report.

According to an embodiment of the disclosure, receiving the measurement report may be related to an event that triggers the measurement report having been satisfied during a first time period.

According to an embodiment of the disclosure, the event may be related to a downlink signal.

According to an embodiment of the disclosure, the first time period may be based on the configuration information.

According to an embodiment of the disclosure, in the case that information related to a second time period that may transmit the downlink signal is transmitted, the first time period may be included in the second time period.

According to an embodiment of the disclosure, the downlink signal may be a downlink signal of the first cell, and the event may be configured for the first cell.

According to an embodiment of the disclosure, during a time period within the first time period in which transmission of a downlink signal from the first cell is not possible, the event configured for the first cell may be based on measurement of a downlink signal from a second cell different from the first cell.

According to an embodiment of the disclosure, the first cell and the second cell may be included in the same cell group (CG).

According to an embodiment of the disclosure, a base station of a communication system may be provided.

According to an embodiment of the disclosure, the base station may include a transceiver; and a processor connected to the transceiver.

According to an embodiment of the disclosure, the processor may be configured to transmit configuration information related to a measurement report; and to receive the measurement report.

According to an embodiment of the disclosure, receiving the measurement report may be related to an event that triggers the measurement report having been satisfied during a first time period.

According to an embodiment of the disclosure, the event may be related to a downlink signal.

According to an embodiment of the disclosure, the first time period may be based on the configuration information.

According to an embodiment of the disclosure, in the case that information related to a second time period that may transmit the downlink signal is transmitted, the first time period may be included in the second time period.

Various embodiments of the disclosure described above are only some of preferred embodiments of the disclosure, and various embodiments reflecting technical features of various embodiments of the disclosure may be derived and understood by those skilled in the art based on the detailed description to be described below.

### [Advantageous Effects of Invention]

The disclosure can provide a device and method capable of effectively providing a service in a communication system.

The disclosure can provide a method and device for supporting a radio resource management (RRM) measurement operation in a communication system.

Effects that can be obtained from various embodiments of the disclosure are not limited to the effects described above, and other effects that are not described can be clearly derived and understood by those skilled in the art based on the detailed description below.

### [Brief Description of Drawings]

FIG. 1 is a diagram illustrating a structure of a new radio according to an embodiment of the disclosure.
FIG. 2 is a message flow diagram illustrating a wireless connection state transition in a new radio according to an embodiment of the disclosure.
FIG. 3 is a diagram illustrating cell DTX/DRX for reducing power consumption of a base station according to an embodiment of the disclosure.
FIG. 4 is a message flow diagram illustrating a process in which a UE performs cell measurement and reporting operations according to an embodiment of the disclosure.
FIG. 5 is a diagram illustrating the case that a UE reports a cell measurement result when a reporting condition of the cell measurement result is satisfied according to an embodiment of the disclosure.
FIG. 6 is a diagram illustrating the case that a UE cannot determine a reporting condition of a cell measurement result due to a non-active period of cell DTX, to which an embodiment of the disclosure is applicable.
FIG. 7 is a diagram illustrating an example of a method for a UE to determine a reporting condition of a cell measurement result in consideration of a non-active period of cell DTX according to an embodiment of the disclosure.
FIG. 8 is a diagram illustrating an example of a method for a UE to determine a reporting condition of a cell measurement result in consideration of a non-active period of cell DTX according to an embodiment of the disclosure.
FIG. 9 is a diagram illustrating an example of a method for a UE to determine a reporting condition of a cell measurement result in consideration of a non-active period of cell DTX according to an embodiment of the disclosure.
FIG. 10 is a diagram illustrating an example of a method for a UE to determine a reporting condition of a cell measurement result in consideration of a non-active period of cell DTX according to an embodiment of the disclosure.
FIG. 11 is a flowchart illustrating a UE operation in which a UE determines a reporting condition of a cell measurement result in consideration of a non-active period of cell DTX according to an embodiment of the disclosure.
FIG. 12 is a flowchart illustrating a base station operation in which a UE determines a reporting condition of a cell measurement result in consideration of a non-active period of cell DTX according to an embodiment of the disclosure.
FIG. 13 is a block diagram illustrating an internal structure of a UE according to an embodiment of the disclosure.
FIG. 14 is a block diagram illustrating a constitution of a base station according to an embodiment of the disclosure.

### [Mode for the Invention]

In the following description, in describing the disclosure, in the case that it is determined that a detailed description of a related well-known function or constitution may unnecessarily obscure the gist of the disclosure, a detailed description thereof will be omitted. Hereinafter, embodiments of the disclosure will be described with reference to the accompanying drawings.

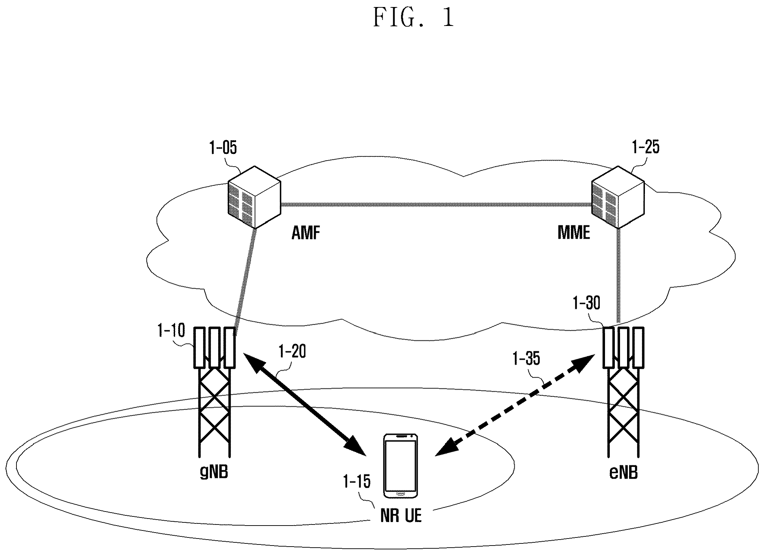

FIG. 1 is a diagram illustrating a structure of a new radio according to an embodiment of the disclosure.

With reference to FIG. 1, as illustrated, a wireless access network of a new radio (NR) includes a new radio node B (hereinafter, referred to as a gNB) 1-10 and an AMF 1-05 (new radio core network). A new radio user equipment (hereinafter, referred to as an NR UE or UE) 1-15 accesses an external network through the gNB 1-10 and the AMF 1-05.

In FIG. 1, the gNB corresponds to an evolved node B (eNB) in the existing Long Term Evolution (LTE) system. The gNB may be connected to the NR UE through a wireless channel and provide a significantly superior service compared to the existing node B (1-20). In the NR, because all user traffic is serviced through a shared channel, a device that collects and schedules status information such as a buffer status, available transmission power status, and channel status of UEs is required, and this is handled by the gNB 1-10. One gNB usually controls multiple cells. In order to implement ultrahigh speed data transmission compared to the existing LTE, the gNB may have a bandwidth higher than the existing maximum bandwidth, and beamforming technology may be additionally applied using orthogonal frequency division multiplexing (hereinafter, referred to as OFDM) as a wireless access technology. Further, an adaptive modulation & coding (hereinafter, referred to as AMC) scheme of determining a modulation scheme and a channel coding rate according to a channel status of the UE is applied. An access and mobility management function (AMF) 1-05 performs functions such as mobility support, bearer configuration, and QoS configuration. The AMF 1-05 is a device that handles various control functions as well as mobility management functions for UEs and is connected to a plurality of base stations. Further, the NR may be linked with the existing LTE system, and the AMF 1-05 is connected to a mobility management entity (MME) 1-25 through a network interface. The MME 1-25 is connected to an eNB 1-30, which is an existing base station. UEs that support LTE-NR dual connectivity may transmit and receive data while maintaining connections to not only the gNB but also the eNB (1-35).

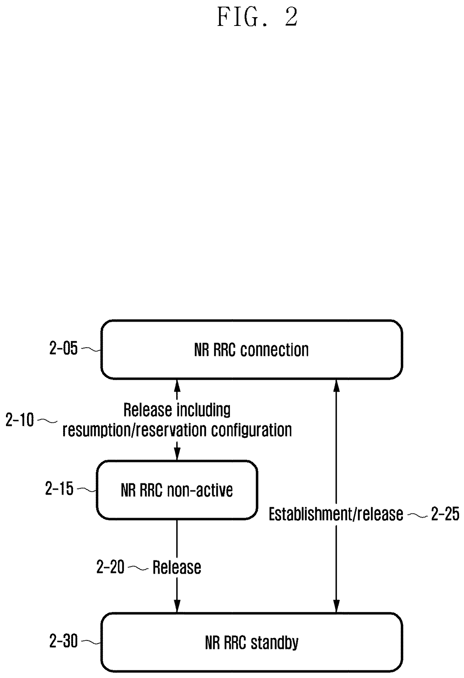

FIG. 2 is a message flow diagram illustrating a wireless connection state transition in a NR according to an embodiment of the disclosure.

The NR has three radio access states (radio resource control (RRC) states). A connected mode (RRC_CONNECTED) 2-05 is a radio access state in which the UE may transmit and receive data. An idle mode (RRC_IDLE) 2-30 is a radio access state in which the UE monitors whether paging is transmitted to itself. The above two modes are radio access states that are also applied to the existing LTE system, and detailed technologies thereof are the same as those of the existing LTE system. The NR newly defines an inactive (RRC_INACTIVE) radio access state 2-15. In the radio access state, a UE context is maintained in the base station and the UE, and radio access network (RAN)-based paging is supported. Characteristics of the new radio access state are as follows.
- Cell re-selection mobility;
- CN(core network) - NR RAN connection (both C/U-planes (control plane, user plane)) has been established for UE;
- The UE AS(access stratum) context is stored in at least one gNB and the UE;
- Paging is initiated by NR RAN;
- RAN-based notification area is managed by NR RAN;
- NR RAN knows the RAN-based notification area which the UE belongs to;

The new INACTIVE radio access state may be transitioned to a connected mode or an idle mode using a specific procedure. The INACTIVE mode is transitioned to the connected mode according to a resume process, and the connected mode is transitioned to the INACTIVE mode using a release procedure including suspend configuration information (2-10). The procedure involves transmission and reception of one or more RRC messages between the UE and the base station and is composed of one or more steps. Further, the INACTIVE mode may be transitioned to the idle mode through a release procedure after a resume procedure (2-20). The transition between the connected mode and the idle mode follows the legacy LTE technology. That is, the transition between the above modes is performed through an establishment or release procedure (2-25).

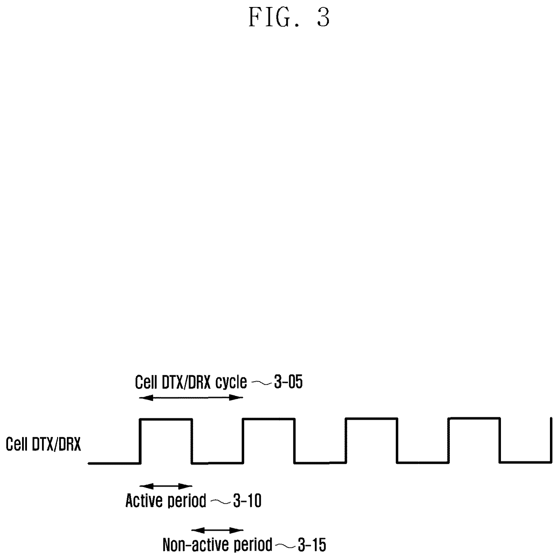

FIG. 3 is a diagram illustrating cell discontinuous transmission (DTX)/discontinuous reception (DRX) for reducing power consumption of a base station according to an embodiment of the disclosure.

In a mobile communication system, because a base station should provide services to a large number of UEs within a service area thereof, power consumption thereof is not small. Accordingly, technologies for reducing power consumption of the base station are being discussed. For example, the following candidate technologies are being proposed in the NR standard.
- Cell DTX/DRX
- NES-aware CHO(conditional handover)
- SSB(synchronization signal block, SS/PBCH (synchronization signal/physical broadcast channel) block)-less/SIB(system information block)-less Cell
- Cell (Re)Selection enhancement
- UE WUS (Wake-up signal)
- UE Assistance Information for NES

Among these, cell DTX/DRX is a technology that periodically turns on or off data transmission and reception. Cell DTX is a technology that turns on and off data transmission by the base station in the downlink, and cell DRX is a technology that turns on and off data reception by the base station in the uplink. During a time period when the base station turns off data transmission and reception, power consumption of the base station may be significantly reduced.

When cell DTX or cell DRX is operated, the base station performs a predetermined operation corresponding to the period for each cell DTX or cell DRX cycle 3-05 consisting of an active period 3-10 and a non-active period 3-15. During the active period, the base station performs normal operations for providing services to existing UEs. During the non-active period, data transmission and reception are usually turned off, and the following options for base station operations are specifically being considered.
- Option 1: The gNB is expected to turn off all transmission and reception for data traffic and reference signal during cell DTX/DRX non-active periods
- Option 2: The gNB is expected to turn off its transmission/reception only for data traffic during cell DTX/DRX non-active periods (i.e., the gNB will still transmit and receive reference signals)
- Option 3: The gNB is expected to turn off its dynamic data transmission/reception during cell DTX/DRX non-active periods (i.e., the gNB is expected to still perform transmission/reception in periodic resources, including SPS(semi-persistent scheduling), CG-PUSCH(configured grant-physical uplink shared channel), SR(scheduling request), RACH(random access channel), and SRS(sounding reference signal))
- Option 4: The gNB is expected to only transmit reference signals (e.g., CSI-RS(channel status information-reference signal) for measurement)

In the first and fourth options, the base station does not broadcast an SSB, which is a common reference signal.

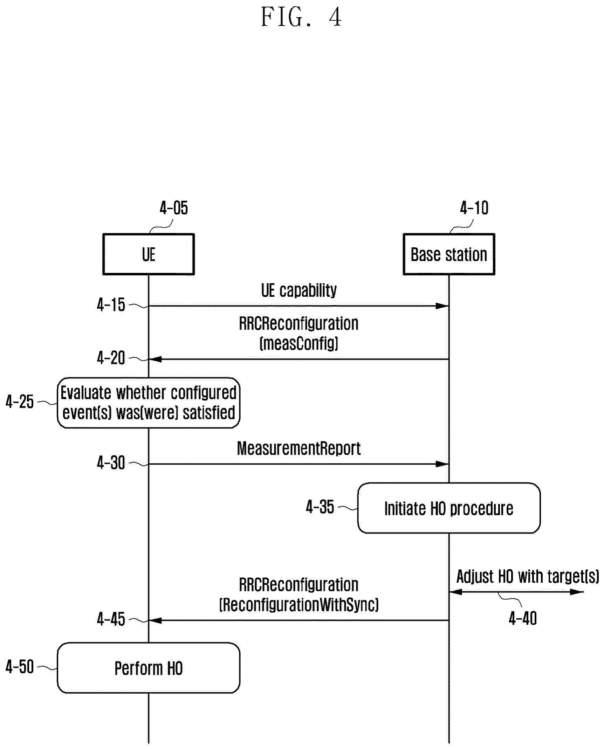

FIG. 4 is a flowchart illustrating a process in which a UE performs cell measurement and reporting operations according to an embodiment of the disclosure.

A UE 4-05 reports capability information thereof to a base station 4-10 (4-15). The base station transmits an RRCReconfiguration message including configuration information (measConfig IE) related to the cell measurement operation to the UE (4-20).

The configuration information includes information required for reporting results measured by the UE to the base station according to periodical, event-triggered, and event-triggered periodical. In particular, in the case of event-triggered reporting or event-triggered periodical, the UE may report predetermined measurement results when a specific configured event is satisfied. For example, the following events may be configured in the NR system.

Events related to typical intra-/inter-RAT measurement are as follows.
Event A1: Serving becomes better than absolute threshold;
Event A2: Serving becomes worse than absolute threshold;
Event A3: Neighbour (Neighbor) becomes amount of offset better than PCell(primary cell)/PSCell(primary secondary cell, primary SCG (secondary cell group) cell);
Event A4: Neighbour becomes better than absolute threshold;
Event A5: PCell/PSCell becomes worse than absolute threshold1 AND Neighbour/SCell(secondary cell) becomes better than another absolute threshold2;
Event A6: Neighbour becomes amount of offset better than SCell;
Event D1: Distance between UE and a reference location referenceLocation1 becomes larger than configured threshold distanceThreshFromReference1 and distance between UE and a reference location referenceLocation2 becomes shorter than configured threshold distanceThreshFromReference2;
Event B1: Neighbour becomes better than absolute threshold;
Event B2: PCell becomes worse than absolute threshold1 AND Neighbour becomes better than another absolute threshold2;

Similarly, even in conditional handover, when a specific event is satisfied, the UE may perform handover according to conditional handover configuration information. Events related to conditional handover are as follows.
CondEvent A3: Conditional reconfiguration candidate becomes amount of offset better than PCell/PSCell;
CondEvent A4: Conditional reconfiguration candidate becomes better than absolute threshold;
CondEvent A5: PCell/PSCell becomes worse than absolute threshold1 AND Conditional reconfiguration candidate becomes better than another absolute threshold2;
CondEvent D1: Distance between UE and a reference location referenceLocation1 becomes larger than configured threshold distanceThreshFromReference1 and distance between UE and a reference location referenceLocation2 of conditional reconfiguration candidate becomes shorter than configured threshold distanceThreshFromReference2;
CondEvent T1: Time measured at UE becomes more than configured threshold t1-Threshold but is less than t1-Threshold + duration;

Even in a sidelink relay, when a specific event is satisfied, the UE may perform a predetermined operation. Events related to a relay are as follows.
Event X1: Serving L2 (layer 2) U2N (UE to network) Relay UE becomes worse than absolute threshold1 AND NR Cell becomes better than another absolute threshold2;
Event X2: Serving L2 U2N Relay UE becomes worse than absolute threshold;
Event Y1: PCell becomes worse than absolute threshold1 AND candidate L2 U2N Relay UE becomes better than another absolute threshold2;
Event Y2: Candidate L2 U2N Relay UE becomes better than absolute threshold;

Even in an NR-unlicensed band (NR-U), when a specific event is satisfied, the UE may perform a predetermined operation. Events related to an NR-U are as follows.

Event I1: Interference becomes higher than absolute threshold.

If the above-described events continuously satisfy a predetermined condition during a predetermined time period (e.g., time-to-trigger), the UE assumes the event to be satisfied (4-25).

When a configured condition is satisfied, the UE reports a MeasurementReport message including a measurement result to the base station (4-30). Alternatively, the UE performs a predetermined UE operation, for example, conditional handover corresponding to the condition. The base station that has received the measurement result may use the result for a predetermined purpose. For example, the base station may determine whether to handover the UE based on the result (4-35). If the base station triggers handover, the base station requests the handover to a predetermined target cell (4-40). Further, the base station transmits handover configuration information constituted based on predetermined configuration information received from the target cell to the UE (4-45). The UE that has received the configuration information performs handover (4-50).

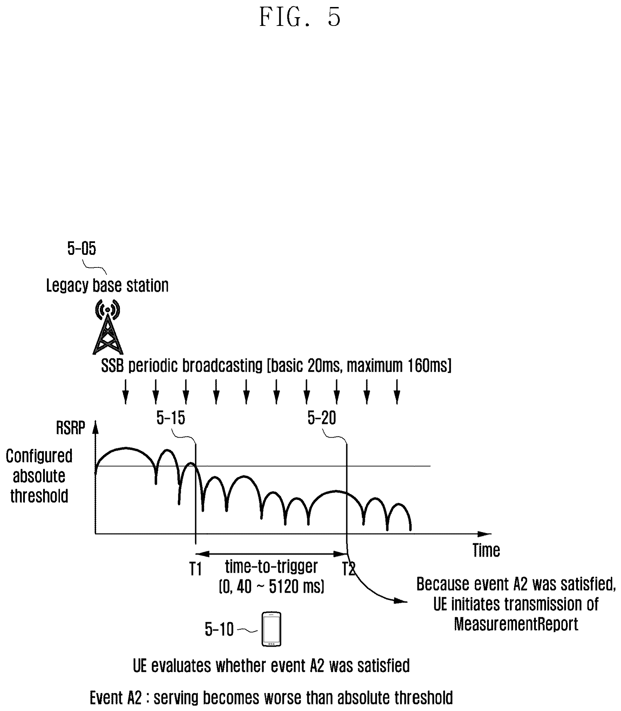

FIG. 5 is a diagram illustrating the case that a UE reports cell measurement results when a reporting condition of the cell measurement results is satisfied according to an embodiment of the disclosure.

A UE 5-10 may evaluate strength or quality of a base station signal based on an SSB or CSI-RS transmitted from a base station 5-05.

Although the disclosure mainly describes an SSB, the disclosure may be equally applied to a CSI-RS. A transmission period of the SSB may be determined according to a configuration of the base station. The transmission period of the SSB is typically 20 ms, and the base station may transmit an SSB at a maximum period of 160 ms.

If the base station has configured an event A2 for the UE, the UE may evaluate whether an RSRP value continuously measured during a predetermined time-to-trigger (TTT) from a time point 5-15, T1 at which a reference signal received power (RSRP) value measured based on the SSB becomes lower than a configured absolute threshold value is lower than the threshold. If an RSRP value measured from an initial time point 5-15 to a time point 5-20, T2 when the time period has elapsed is lower than the threshold, the UE may assume that the event A2 has been satisfied and report an event A2-triggered measurement report to the base station. The reason for considering the TTT as described above may be to compensate for variability of the measured signal. The TTT value is configured by the base station for each configured event. The TTT value may be configured to 0, 40 to 5120 ms.

If the above-described events continuously satisfy a predetermined condition during a predetermined time period (TTT), a UE operation corresponding to the purpose of the configured event will be performed.

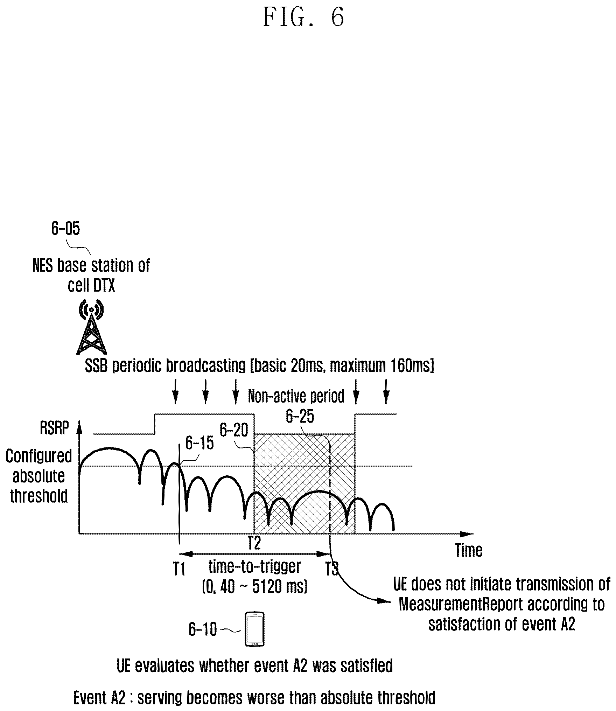

FIG. 6 is a diagram illustrating the case that a UE cannot determine a reporting condition of cell measurement results due to a non-active period of cell DTX, to which an embodiment of the disclosure is applicable.

A UE 6-10 may evaluate strength or quality of a base station signal based on an SSB or CSI-RS transmitted from a base station 6-05. In this case, the base station may support a network energy saving (NES) function, and in particular, the base station may be operating cell DTX. The base station may not transmit the SSB or CSI-RS during a non-active period that arrives at a specific period. The base station may provide cell DTX pattern information on the cell DTX to the UE through system information or predetermined dedicated signaling. At least one of information on an active-period or information on a non-active period may be identified based on the cell DTX pattern information.

If the base station has configured an event A2 to the UE, the UE may evaluate whether an RSRP value measured continuously during a time point 6-25, T3 at which a predetermined time period TTT has elapsed from a time point 6-15, T1 at which an RSRP value measured based on an SSB (or CSI-RS) becomes lower than a configured absolute threshold value is lower than the threshold. During the TTT (before the TTT elapses), a non-active period of cell DTX may arrive (6-20)(T2). During the non-active period, because the base station does not transmit an SSB (or CSI-RS), the RSRP value may not be measured during the non-active period. Therefore, it may be difficult for the UE to determine that an RSRP value measured from the initial time point 6-15 to the time point 6-25 at which the TTT has elapsed is lower than the threshold. For example, even in the case of an event A2, if the UE assumes that the RSRP value, which is not measured during the period, is lower than the threshold and reports the event A2-triggered measurement report, the base station may misinterpret the current channel state. For example, during the non-active period, the RSRP value of the channel may become higher than the threshold.

Because measurement information included in the MeasurementReport message reported from the UE will play an important role in determining whether to perform handover of the UE, such misinterpretation may significantly deteriorate a performance of the UE. Therefore, a method for minimizing misinterpretation due to the non-active period of the cell DTX may be required.

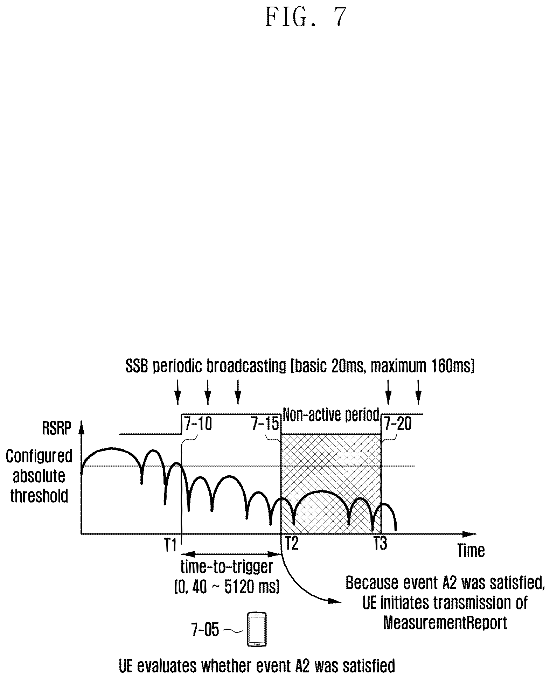

FIG. 7 is a diagram illustrating an example of a method for a UE to determine a reporting condition of a cell measurement result in consideration of a non-active period of cell DTX according to an embodiment of the disclosure.

According to an embodiment illustrated in FIG. 7, a length of the TTT may be configured to be shorter than or equal to an active period of cell DTX. If the length of the TTT is configured as described above, there is a possibility that a predetermined configured event is satisfied within the TTT during the active period of cell DTX. FIG. 7 illustrates an event A2, but an embodiment of the disclosure may be applied to other events. In the case that a measured RSRP value becomes lower than the threshold of the event A2 at a specific time point 7-10, T1, a UE 7-05 may assume the specific time point 7-10 as a start time point of the TTT. If the length of the TTT is configured to be shorter than or equal to an active period of cell DTX, the UE may evaluate whether the event A2 has been satisfied during the TTT because the TTT ends before a time point 7-15, T2 at which the active period of the cell DTX ends. If the event A2 has been continuously satisfied during the TTT, the UE may transmit an event A2-triggered measurement report to the base station at an end point time of the TTT. If the active period of cell DTX ends and the non-active period arrives (7-15), an SSB (or CSI-RS) is not transmitted during the non-active period; thus, the UE may not evaluate whether conditions of the configured events have been satisfied. When the non-active period elapses (after the non-active period) (7-20)(T3), the UE may restart the evaluation on whether conditions of the configured events have been satisfied.

In an embodiment of the disclosure illustrated in FIG. 7, a TTT value is limited by an active period of cell DTX; thus, an embodiment of the disclosure illustrated in FIG. 7 may be applied in compensation for a wireless channel environment with a relatively small fluctuation.

As illustrated in FIG. 7, a start time point of an active period of cell DTX does not always coincide with a start time point of the TTT, and the start time point of the TTT may be when conditions of a specific event are satisfied, regardless of a pattern of cell DTX. This may be equally applied to the description of an embodiment of the disclosure below. However, this is for convenience of description, and the disclosure is not limited thereto.

In the following description of an embodiment of the disclosure, an event A2 is mainly exemplified, but an embodiment of the disclosure may be applied to other events as well.

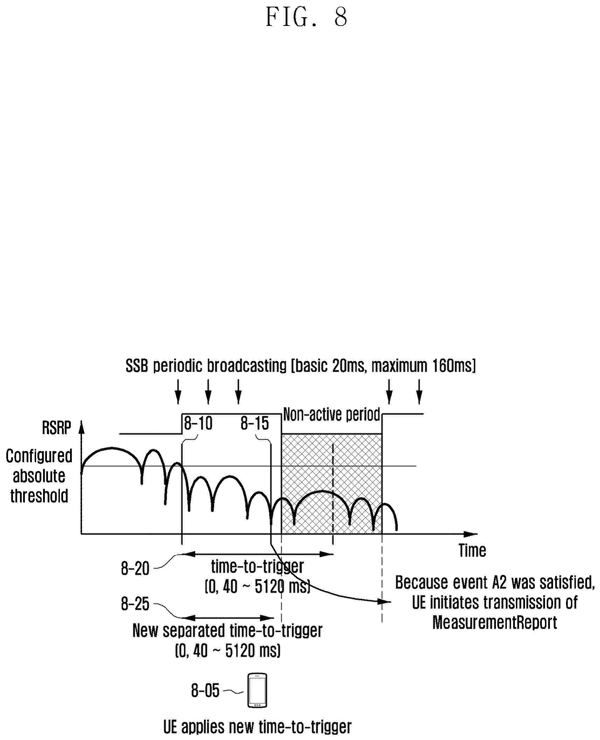

FIG. 8 is a diagram illustrating an example of a method for a UE to determine a reporting condition of a cell measurement result in consideration of a non-active period of cell DTX according to an embodiment of the disclosure.

According to an embodiment illustrated in FIG. 8, the base station may configure a plurality of TTTs to the UE for each event. The base station may dynamically activate or deactivate cell DTX through layer 1 (L1)/L2 signaling. Accordingly, when cell DTX is activated, the UE may apply one of TTTs having a length shorter than or equal to an active period of the activated cell DTX to evaluate whether conditions of each preconfigured event have been satisfied.

For example, it may be assumed that cell DTX is activated at a specific time point 8-10 and an active period of cell DTX starts at the specific time point. In the case that the measured RSRP value becomes lower than the threshold of an event A2 at the specific time point 8-10, a UE 8-05 may assume the specific time point 8-10 as a start time point of the TTT. If the previously applied TTT 8-20 is longer than the active period of cell DTX, the UE 8-05 may newly apply a value 8-25 shorter than or equal to the active period of cell DTX (may be applied as a new separate TTT) among previously configured TTT values. In the case that there are a plurality of TTT values satisfying the above condition (e.g., a value shorter than or equal to the active period of cell DTX), as the newly applied value, the longest one among them may be selected or may be determined according to UE implementation.

If the length of the TTT is configured to be shorter than or equal to the active period of cell DTX, the TTT ends before the end time point of the active period of cell DTX; thus, the UE may evaluate whether the event A2 has been satisfied during the TTT. If the event A2 has been continuously satisfied during the TTT, the UE may transmit an event A2-triggered measurement report to the base station at an end time point 8-15 of the newly configured TTT. If the active period of cell DTX ends and the non-active period arrives, an SSB (or CSI-RS) is not transmitted during the non-active period; thus, the UE may not evaluate whether conditions of the configured events have been satisfied. When the non-active period elapses, the UE may restart the evaluation on whether conditions of the configured events have been satisfied.

The base station may provide a plurality of TTT configuration values for each event through a MeasConfig information element (IE). In this case, a scaling factor may be considered to indicate the plurality of TTT values. For example, one TTT value may be provided for each event, and one or more scaling factor values may be provided together. Other TTT values, except for one provided TTT value may be derived based on the one provided TTT value and the scaling factor. For example, other TTT values, aside from one provided TTT value may be derived as the product of one provided TTT value and the scaling factor. In this case, the scaled TTT value may be shorter than or equal to the active period of cell DTX.

When determining a plurality of TTT values or scaling factors, the base station may consider characteristics (e.g., at least one of a period, start slot and offset, or active period time period) of cell DTX it will use.

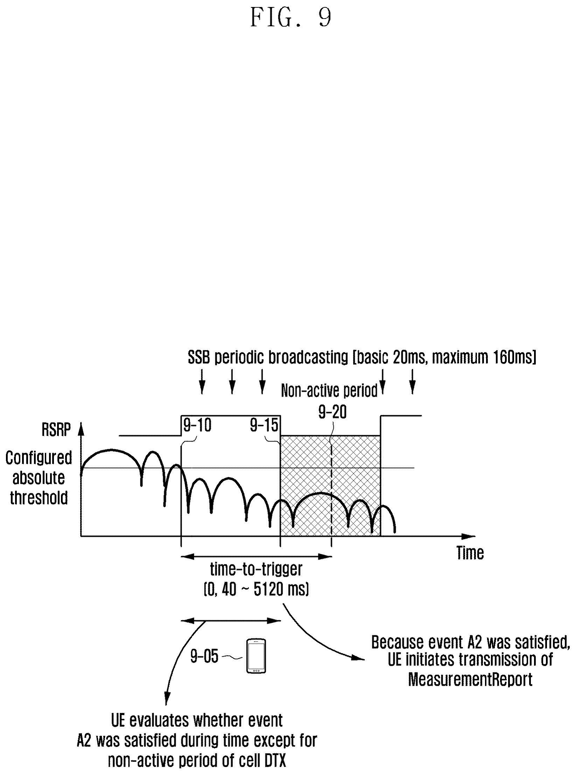

FIG. 9 is a diagram illustrating an example of a method for a UE to determine a reporting condition of a cell measurement result in consideration of a non-active period of cell DTX according to an embodiment of the disclosure.

According to an embodiment illustrated in FIG. 9, if the TTT overlaps with the non-active period of cell DTX, it may be evaluated whether conditions of the configured events have been satisfied during the remaining TTT time period, except for the overlapping portion.

In the case that a measured RSRP value becomes lower than the threshold of an event A2 at a specific time point 9-10, a UE 9-05 may assume the specific time point 9-10 as a start time point of the TTT. During the TTT (within the TTT), when a non-active period of cell DTX arrives, the non-active period may not be considered as a time period for evaluating whether conditions of the configured event are satisfied. That is, whether conditions of the configured event are satisfied may not be evaluated at a time period where the TTT and the non-active period overlap. That is, whether conditions of the configured event are satisfied may be evaluated in the remaining time period, except for a time period where the non-active period overlaps within a time period of the TTT. That is, if conditions of the configured event are satisfied in the remaining time period, except for a time period overlapped with the non-active period during the TTT, the UE may report a MeasurementReport message to the base station.

Even if the TTT overlaps with the non-active period of cell DTX, a TTT timer may still be operated. Therefore, the longer a time period during which the TTT overlaps with the non-active period, the shorter an actual time period for evaluating whether conditions of the configured event are satisfied.

A time point 9-20 at which the TTT starts and ends may overlap with the non-active period of cell DTX. Because the UE excludes the time period overlapped with the non-active period from the evaluation, if conditions of the configured event are satisfied at a time point 9-15 at which the TTT interval and the non-active period start to overlap without having to wait until the end time point of the TTT, the UE may report the MeasurementReport message to the base station.

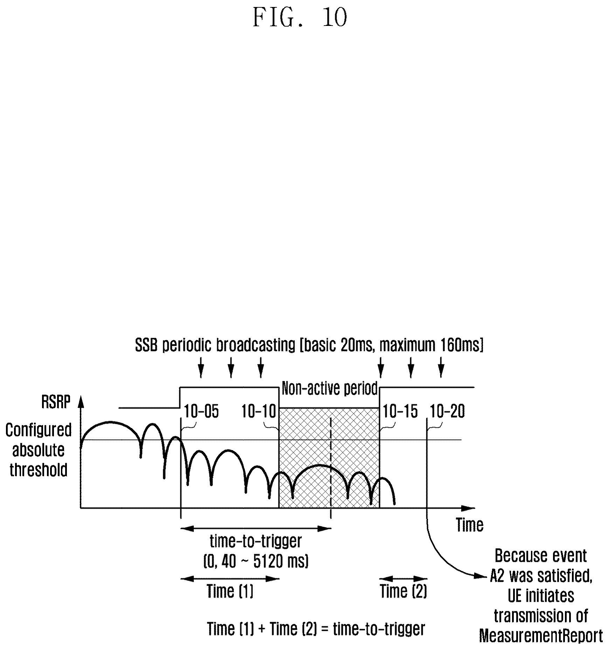

FIG. 10 is a diagram illustrating an example of a method for a UE to determine a reporting condition of a cell measurement result in consideration of a non-active period of cell DTX according to an embodiment of the disclosure.

According to an embodiment illustrated in FIG. 10, when the TTT overlaps with the non-active period of cell DTX, it is evaluated whether conditions of the configured events have been satisfied, except for the overlapping portion, but the running TTT timer may be temporarily paused during the overlapping portion. Accordingly, even if the time period in which the TTT and the non-active period overlap becomes longer, an actual time period for evaluating whether conditions of the configured events are satisfied may not change.

In the case that a measured RSRP value becomes lower than a threshold of an event A2 at a specific time point 10-05, the UE may assume the specific time point 10-05 as a start time point of the TTT. When a non-active period of cell DTX arrives at a time point 10-10 at which the TTT has not yet expired, the UE may temporarily pause the TTT timer and also temporarily pause an operation of evaluating whether conditions of the configured event are satisfied. However, the UE may not reset the TTT timer. When the non-active period of cell DTX ends (10-15), the UE may run again the TTT timer and restart the evaluation on whether conditions of the configured event are satisfied. If the TTT is restarted and an end time point 10-20 of the TTT arrives and conditions of the configured event are satisfied during a time period during which the TTT timer was running, the UE may report a MeasurementReport message to the base station. That is, the sum of a first time (Time (1)) between time points 10-05 and 10-10 and a second time (Time (2)) between time points 10-15 and 10-20 may be the length of a time period corresponding to the TTT timer (Time (1) + Time (2) = Time-to-trigger).

According to another method according to an embodiment of the disclosure, if the UE enters a non-active period during the TTT and the configured event conditions have been satisfied prior to that, the UE may immediately report a MeasurementReport message to the base station after transitioning to an active period. This may be useful when patterns of cell DTX and cell DRX match.

The base station may transmit L1/L2 signaling to transition a specific cell from an active period to a non-active period through any one cell, and in this case, the UE may give up transmitting the MeasurementReport corresponding to the running TTT.

According to another method according to an embodiment of the disclosure, if the UE enters a non-active period during the TTT, and the ratio of the TTT overlapping with the non-active period is greater than a specific configured value (or is equal to or greater than a specific configured value), and the configured event conditions have been satisfied prior to that, the UE may report a MeasurementReport message to the base station when the TTT expires. Alternatively, under the above conditions, the UE may immediately report the MeasurementReport message to the base station when transitioning to the active period.

According to another method according to an embodiment of the disclosure, when a non-active period arrives while the UE measures a specific cell in a carrier aggregation/dual connectivity (CA/DA) scenario, during the non-active period, the UE may instead measure an SSB or CSI-RS of another activated or configured serving cell within the same cell group (CG), and evaluate whether conditions of events configured for the specific cell have been satisfied using the same. At least one of matters considered during the non-active period (e.g., whether to measure an SSB or CSI-RS in the CG, the other serving cell, and a reference signal of the other serving cell) may be configured by the base station.

In a mobile communication system, there are procedures in which a predetermined UE operation is triggered when configured conditions are continuously satisfied during a specific time period. For example, in addition to the event-triggered measurement report based on SSB/CSI-RS measurement described above, when the UE is in an idle mode or an inactive mode, if signal strength or quality (RSRP, reference signal received quality (RSRQ)) of a cell measured during a specific time period, T_Reselection satisfies preconfigured conditions, the UE may perform cell reselection to a specific cell. If the base station applies cell DTX, an embodiment of the disclosure may be applied to the cell reselection procedure.

For the purpose of saving UE power consumption, the UE evaluates a moving speed of the UE according to a predetermined formula, and if it is determined that the UE is moving at a low speed (or stationary), the UE may temporarily pause some of intra-/inter-/inter-RAT cell measurement operations, or adjust requirements (such as measurement period) applied to the operations in the direction of reducing power consumption (such as applying a longer measurement period). This is referred to as relaxed measurement. In this case, the predetermined formulas from the TS38.304 standard document are as illustrated in Table 1. The following formulas are distinguished according to a general UE or a reduced capability (RedCap) UE, and each formula is regarded to be satisfied if the following formula is maintained during a predetermined time period T_{SearchDeltaP} or T_{SearchDeltaP-Stationary}.

**[Table 1]**

| | |
|---|---|
| TS38.304 | |
| 5.2.4.9.1 **Relaxed measurement criterion for UE with low mobility** | |
| The relaxed measurement criterion for UE with low mobility is fulfilled when: | |
| | - (Srxlev_{Ref} -Srxlev) < S_{SearchDeltaP}, |
| Where: | |
| | - Srxlev = current Srxlev value of the serving cell (dB). |
| - Srxlevref reference Srxlev value of the serving cell (dB), set as follows: | |
| | - After selecting or reselecting a new cell, or |
| | - If (Srxlev - Srxlev_{Ref}) > 0, or |
| - If the relaxed measurement criterion has not been met for T_{searchDeltaP}: | |
| - The UE shall set the value of Srxlevref to the current Srxlev value of the serving cell. (ellipsis) | |
| 5.2.4.9.3 **Relaxed measurement criterion for a stationary RedCap UE** | |
| The relaxed measurement criterion for a stationary RedCap UE is fulfilled when: | |
| | - (Srxlev _{RefStationary} Srxlev) <S_{SearchDeltaP-Stationary}, |
| Where: | |
| | - Srxlev current Srxlev value of the serving cell (dB). |
| - Srxlev_{RefStationary} reference Srxlev value of the serving cell (dB), set as follows: | |
| | - After selecting or reselecting a new cell, or |
| | - If (Srxlev - Srxlev_{RefStationary}) > 0, or |
| | - If the relaxed measurement criterion has not been met for |
| T_{SearchDeltaP-Stationary}: | |
| - The UE shall set the value of Srxlev _{RefStationary} to the current Srxlev value of the serving cell. | |

If there is a non-active period of cell-DTX during the predetermined time period T_{SearchDeltaP} or T_{SearchDeltaP-Stationary}, the same issue as that in the RRM measurement occurs. Therefore, an embodiment of the disclosure may be applied. That is, the predetermined time period T_{SearchDeltaP} or T_{SearchDeltaP-Stationary} may correspond to the TTT of an embodiment of the disclosure, and the (Srxlev_{Ref} - Srxlev) < S_{SearchDeltaP} or (Srxlev_{RefStationary} - Srxlev) < S_{SearchDeltaP-Stationary} may correspond to the event condition of an embodiment of the disclosure. That is, an embodiment of the disclosure related to the TTT may be applied to at least one of the predetermined time period T_{SearchDeltaP} or T_{SearchDeltaP-Stationary}, and an embodiment of the disclosure related to the event condition may be applied to at least one of the (Srxlev_{Ref} - Srxlev) < S_{SearchDeltaP} or (Srxlev_{RefStationary} - Srxlev) < S_{SearchDeltaP-Stationary}.

Among events, there may be events that consider results measured from a plurality of cells. In this case, different cell DTX patterns may be applied to the considered cells. This may make it more complicated for the UE to evaluate whether predetermined event conditions are satisfied during the TTT. For example, assuming that there is an event condition that compares signal strength of a first cell and a second cell, when the first cell is in an active period of cell DTX, the second cell may be in a non-active period. In this case, it becomes difficult to evaluate the event condition. Even in this case, embodiments of the disclosure may be applied through the following assumptions. That is, all time periods that combine non-active periods of all cells considered in the event conditions are regarded as the non-active period described in an embodiment of the disclosure (e.g., if the UE is in a non-active period of either the first cell or the second cell, it may be regarded as the non-active period described in an embodiment of the disclosure), or in order to overcome the above problem, the base station may configure cell DTX patterns of all serving cells configured for one UE or all serving cells within the same CG to be identical.

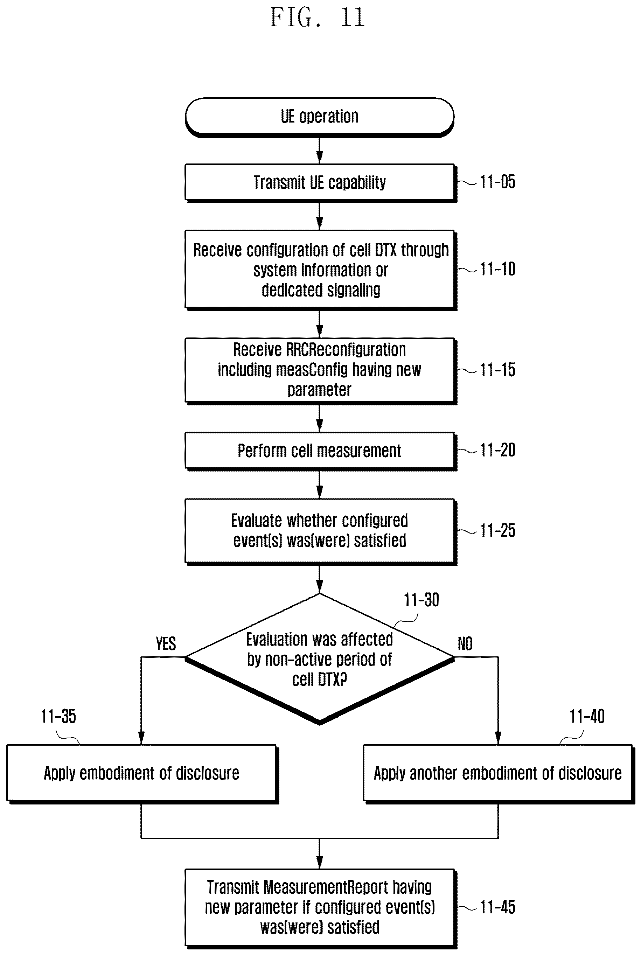

FIG. 11 is a flowchart illustrating a UE operation in which a UE determines a reporting condition of a cell measurement result in consideration of a non-active period of cell DTX according to an embodiment of the disclosure.

At step 11-05, the UE may report capability information thereof to the base station. The capability information may include at least one of an indicator indicating whether the UE supports cell DTX/DRX, or an indicator indicating whether the UE may perform cell measurement and reporting operations in consideration of the cell DTX/DRX.

At step 11-10, the UE may receive cell DTX pattern information of a specific cell from the base station through system information or dedicated signaling.

At step 11-15, the UE may receive an RRCReconfiguration message including a measConfig IE from the base station. The measConfig IE may include measurement event configuration information, and one or more TTT configuration values may be provided for each configured event.

At step 11-20, the UE may perform a cell measurement operation according to configuration information included in the measConfig IE.

At step 11-25, the UE may evaluate whether preconfigured event conditions were satisfied based on the measurement results.

At step 11-30, the UE may determine whether a pattern of cell DTX applied by the base station affects the evaluation.

At step 11-35, if a pattern of cell DTX applied by the base station affects the evaluation, the UE may perform the evaluation operation according to an embodiment of the disclosure described above. For example, the UE may perform the evaluation operation based on a method for determining a reporting condition of a cell measurement result according to at least one of an embodiment illustrated in FIG. 7 or an embodiment illustrated after the description of FIG. 7.

At step 11-40, if a pattern of cell DTX applied by the base station does not affect the evaluation, the UE may perform the evaluation operation according to a method different from the method of determining the reporting condition of the cell measurement result at step 11-35. For example, the UE may perform the evaluation operation according to an embodiment illustrated in FIG. 5.

At step 11-45, the UE may report a MeasurementReport message to the base station according to the evaluation result, or perform a predetermined operation (e.g., performing conditional handover, cell reselection, and the like) corresponding to the preconfigured event.

If an evaluation operation is performed according to an embodiment of the disclosure and transmission of the MeasurementReport message is thereby triggered, the MeasurementReport message may include predetermined information indicating that transmission of the message was triggered according to the evaluation that the measurement result included in the MeasurementReport message reflects the influence of cell DTX. For example, at least one of the following information may be included in the MeasurementReport message.
- New indicator to indicate if the new secondary Time-to-trigger was applied
- New indicator to indicate if the scaled Time-to-trigger was applied
- Value of Time-to-trigger applied for triggering report
- New indicator to indicate if the triggering report was affected by the non-active period of cell DTX

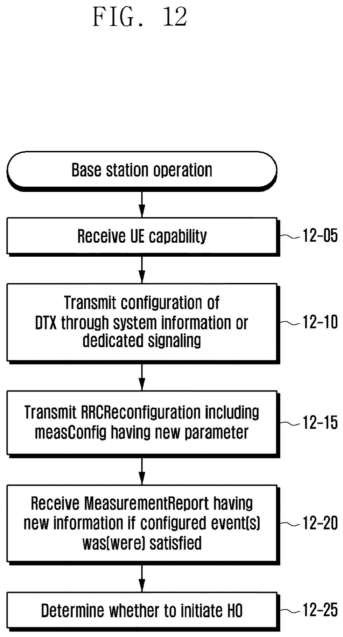

FIG. 12 is a flowchart illustrating a base station operation for determining a reporting condition of a cell measurement result by a UE in consideration of a non-active period of cell DTX according to an embodiment of the disclosure.

At step 12-05, the base station may receive capability information from the UE.

At step 12-10, the base station may transmit cell DTX pattern information of a specific cell through system information or dedicated signaling.

At step 12-15, the base station transmits an RRCReconfiguration message including a measConfig IE. The measConfig IE may include measurement event configuration information, and one or more TTT configuration values may be provided for each configured event.

At step 12-20, the base station may receive a MeasurementReport message from the UE. The message may include predetermined information indicating that the measurement result is affected by cell DTX.

At step 12-25, the base station may trigger a predetermined operation such as handover based on the reported measurement result.

The above-described flowchart illustrates an exemplary method that may be implemented according to the principles of the disclosure, and various modifications may be made to a method illustrated in the flowchart in the disclosure. For example, although illustrated as a series of steps, various steps in each drawing may overlap, occur in parallel, occur in different orders, or occur multiple times. In other examples, steps may be omitted or replaced with other steps.

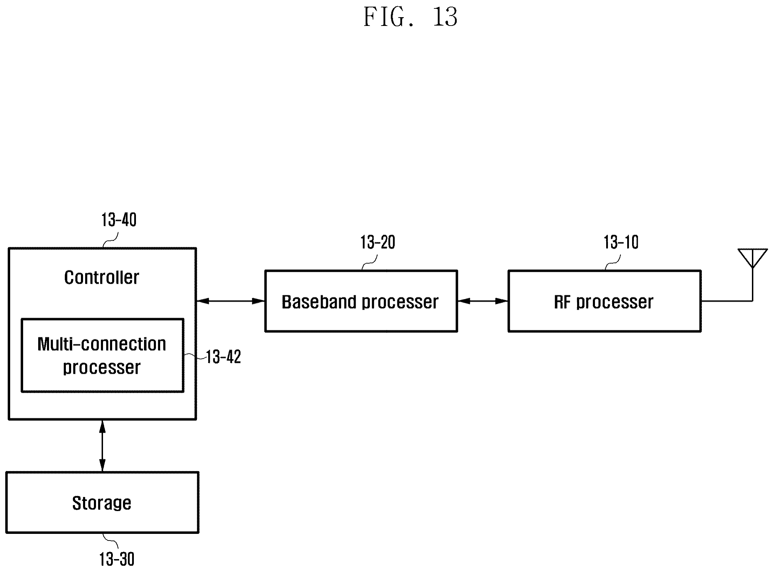

FIG. 13 is a block diagram illustrating an internal structure of a UE to which the disclosure is applied.

With reference to FIG. 13, the UE includes a radio frequency (RF) processer 13-10, a baseband processer 13-20, a storage 13-30, and a controller 13-40.

The RF processer 13-10 performs a function for transmitting and receiving a signal through a wireless channel, such as band conversion and amplification of a signal. That is, the RF processer 13-10 may up-convert a baseband signal provided from the baseband processer 13-20 into an RF band signal, transmits the RF band signal through an antenna, and downconvert the RF band signal received through the antenna into a baseband signal. For example, the RF processer 13-10 may include a transmission filter, a reception filter, an amplifier, a mixer, an oscillator, a digital to analog converter (DAC), an analog to digital converter (ADC), and the like. In the above drawing, although only one antenna was illustrated, the UE may include a plurality of antennas. Further, the RF processer 13-10 may include a plurality of RF chains. Furthermore, the RF processer 13-10 may perform beamforming. For the beamforming, the RF processer 13-10 may adjust a phase and magnitude of each of signals transmitted and received through a plurality of antennas or antenna elements. Further, the RF processer may perform MIMO, and receive multiple layers when performing a MIMO operation.

The baseband processer 13-20 performs a conversion function between a baseband signal and a bit stream according to a physical layer standard of a system. For example, when transmitting data, the baseband processer 13-20 encodes and modulates the transmission bit stream to generate complex symbols. Further, when receiving data, the baseband processer 13-20 demodulates and decodes the baseband signal provided from the RF processer 13-10 to restore the received bit stream. For example, in the case of following orthogonal frequency division multiplexing (OFDM) scheme, when transmitting data, the baseband processer 13-20 encodes and modulates a transmission bit stream to generate complex symbols, maps the complex symbols to subcarriers, and then form OFDM symbols through inverse fast Fourier transform (IFFT) operation and cyclic prefix (CP) insertion. Further, when receiving data, the baseband processer 13-20 divides the baseband signal provided from the RF processer 13-10 into OFDM symbol units, restores signals mapped to subcarriers through a fast Fourier transform (FFT) operation, and then restores the received bit stream through demodulation and decoding.

The baseband processer 13-20 and the RF processer 13-10 transmit and receive signals, as described above. Accordingly, the baseband processer 13-20 and the RF processer 13-10 may be referred to as a transmitter, a receiver, a transceiver, or a communication unit. Furthermore, at least one of the baseband processer 13-20 or the RF processer 13-10 may include a plurality of communication modules so as to support a plurality of different radio access technologies. Further, at least one of the baseband processer 13-20 or the RF processer 13-10 may include different communication modules so as to process signals of different frequency bands. For example, the different radio access technologies may include a wireless LAN (e.g., IEEE 802.11), a cellular network (e.g., LTE), and the like. Further, the different frequency bands may include a super high frequency (SHF) (e.g., 2.NRHz, NRhz) band, and a millimeter wave (e.g., 60GHz) band.

The storage 13-30 stores data such as a basic program, an application program, and configuration information for an operation of the UE. In particular, the storage 13-30 may store information related to a second access node that performs wireless communication using second radio access technology. The storage 13-30 provides stored data according to a request of the controller 13-40.

The controller 13-40 controls overall operations of the UE. For example, the controller 13-40 transmits and receives signals through the baseband processer 13-20 and the RF processer 13-10. Further, the controller 13-40 writes and reads data in the storage 13-40. To this end, the controller 13-40 may include at least one processor. For example, the controller 13-40 may include a communication processor (CP) that controls for communication and an application processor (AP) that controls an upper layer such as an application program.

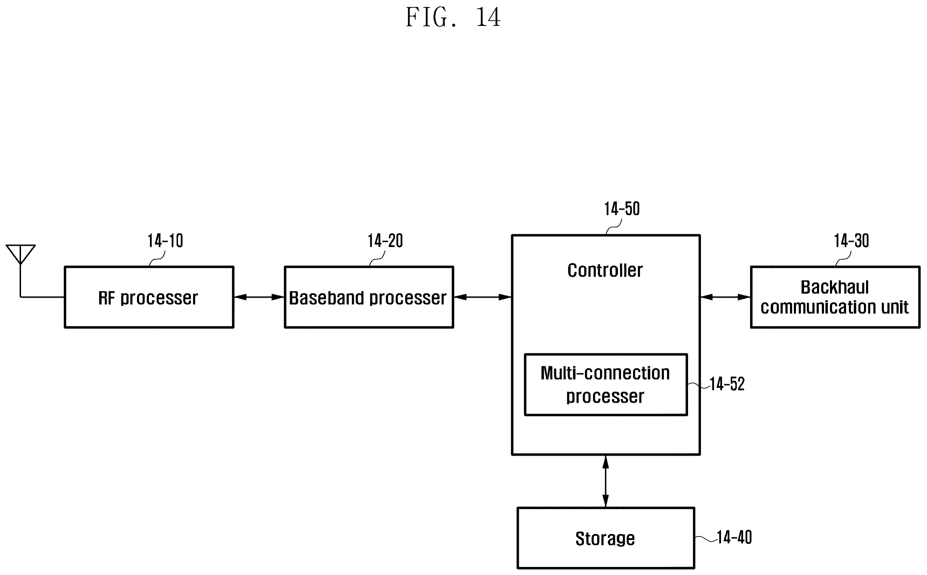

FIG. 14 is a block diagram illustrating a constitution of a base station according to the disclosure.

With reference to FIG. 14, the base station includes an RF processer 14-10, a baseband processer 14-20, a backhaul communication unit 14-30, a storage 14-40, and a controller 14-50.

The RF processer 14-10 performs a function for transmitting and receiving a signal through a wireless channel, such as band conversion and amplification of a signal. That is, the RF processer 14-10 up-converts a baseband signal provided from the baseband processer 14-20 into an RF band signal, transmits the RF band signal through an antenna, and down-converts the RF band signal received through the antenna into a baseband signal. For example, the RF processor 14-10 may include a transmission filter, a reception filter, an amplifier, a mixer, an oscillator, a DAC, an ADC, and the like. In the above drawing, only one antenna is illustrated, but a first connection node may have multiple antennas. Further, the RF processer 14-10 may include a plurality of RF chains. Furthermore, the RF processor 14-10 may perform beamforming. For the beamforming, the RF processer 14-10 may adjust a phase and size of each of signals transmitted and received through a plurality of antennas or antenna elements. The RF processer may transmit one or more layers to perform a downlink MIMO operation.

The baseband processor 14-20 performs a conversion function between a baseband signal and a bit stream according to the physical layer standard of first radio access technology. For example, when transmitting data, the baseband processor 14-20 encodes and modulates a transmission bit stream to generate complex symbols. Further, when receiving data, the baseband processer 14-20 demodulates and decodes a baseband signal provided from the RF processer 14-10 to restore a received bit stream. For example, in the case of following an orthogonal frequency division multiplexing (OFDM) scheme, when transmitting data, the baseband processer 14-20 encodes and modulates a transmission bit stream to generate complex symbols, maps the complex symbols to subcarriers, and constitutes OFDM symbols through an IFFT operation and CP insertion. Further, when receiving data, the baseband processer 14-20 divides the baseband signal provided from the RF processer 14-10 into OFDM symbol units, restores signals mapped to subcarriers through FFT operation, and restores the received bit stream through demodulation and decoding. The baseband processer 14-20 and the RF processer 14-10 transmit and receive signals, as described above. Accordingly, the baseband processer 14-20 and the RF processer 14-10 may be referred to as a transmitter, a receiver, a transceiver, a communication unit, or a RF unit.

The backhaul communication unit 14-30 provides an interface for communicating with other nodes in the network. That is, the backhaul communication unit 14-30 converts a bit stream transmitted from a main base station to another node, for example, an auxiliary base station and a core network into a physical signal, and converts a physical signal received from another node into a bit stream.

The storage 14-40 stores data such as a basic program, an application program, and configuration information for operation of the main base station. In particular, the storage 14-40 may store information on bearers allocated to the accessed UE, measurement results reported from the accessed UE, and the like. Further, the storage 14-40 may store information to be a criterion for determining whether to provide or stop multiple connections to the UE. The storage 14-40 provides the stored data according to the request of the controller 14-50.

The controller 14-50 controls overall operations of the main base station. For example, the controller 14-50 may transmit and receive signals through the baseband processer 14-20 and the RF processer 14-10 or through the backhaul communication unit 14-30. Further, the controller 14-50 writes and reads data in the storage 14-40. To this end, the controller 14-50 may include at least one processor.

While the drawings illustrate different examples of a user device, various changes may be made to the drawings. For example, the user device may include any number of each of the components in any suitable disposition. In general, the drawings do not limit the scope of the disclosure to any particular configuration. Furthermore, while the drawings illustrate operating environments in which various user device characteristics disclosed in this patent document may be utilized, such characteristics may be utilized in any other suitable system.

The disclosure has been described with exemplary embodiments, but various changes and modifications may be suggested to those skilled in the art. It is intended that the disclosure cover such changes and modifications as fall within the scope of the appended claims. The description in this application should not be construed as implying that any specific element, step, or function is an essential element that should be included in the scope of the claims. The scope of the patented subject matter is defined by the claims.

## Claims

1. A method performed by a terminal in a communication system, the method comprising:
receiving configuration information associated with a measurement report;
identifying a first time period based on the configuration information; and
transmitting the measurement report in the case that an event that triggers the measurement report is satisfied during the first time period,
wherein the event is associated with measurement of a downlink signal, and
wherein in the case that information associated with a second time period in which reception of the downlink signal is available is received, the first time period is included in the second time period.

2. The method of claim 1, wherein the configuration information comprises information on a plurality of time periods, and
wherein the first time period is (i) a longest time period or (ii) a time period determined by the terminal among one or more time periods with a length less than or equal to the second time period among the plurality of time periods.

3. The method of claim 1, wherein the configuration information comprises information on a plurality of scale factors and information on a specific time period, and
wherein the first time period is (i) a longest time period or (ii) a time period determined by the terminal among a plurality of time periods to which the plurality of scale factors are applied to the specific time period.

4. The method of claim 1, wherein the first time period is identified so as not to overlap with a third time period in which reception of the downlink signal is not available, or
wherein in the case that a specific time period for the first time period overlaps with the third time period, the first time period is identified as the specific time period with the third time period excluded, and the measurement report is transmitted in case that a transition occurs from the third time period to the second time period, or
wherein in the case that the specific time period overlaps with the third time period, the first time period is reserved while the specific time period overlaps with the third time period, and includes at least a portion of the second time period transitioned during the third time period.

5. The method of claim 4, wherein the second time period is an active time of cell discontinuous transmission (DTX), the third time period is a non-active time of the cell DTX, and the cell DTX is activated by dynamic signaling.

6. The method of claim 1, wherein the downlink signal is a downlink signal of the first cell, and the event is configured for the first cell,
wherein, during a time period within the first time period in which reception of a downlink signal from the first cell is not available, the event configured for the first cell is based on measurement of a downlink signal from a second cell different from the first cell, and
wherein the first cell and the second cell are included in the same cell group (CG).

7. A terminal in a communication system, the terminal comprising:
a transceiver; and
a processor connected to the transceiver,
wherein the processor is configured to:
receive configuration information associated with a measurement report;
identify a first time period based on the configuration information; and transmit the measurement report in the case that an event that triggers the measurement report is satisfied during the first time period,
wherein the event is associated with measurement of a downlink signal, and
wherein in the case that information associated with a second time period in which reception of the downlink signal is available is received, the first time period is included in the second time period.

8. The terminal of claim 7, wherein the configuration information comprises information on a plurality of time periods, and
wherein the first time period is (i) a longest time period or (ii) a time period determined by the terminal among one or more time periods with a length less than or equal to the second time period among the plurality of time periods.

9. The terminal of claim 7, wherein the configuration information comprises information on plurality of scale factors and information on a specific time period, and
wherein the first time period is (i) a longest time period or (ii) a time period determined by the terminal among a plurality of time periods to which the plurality of scale factors are applied to the specific time period.

10. The terminal of claim 7, wherein the first time period is identified so as not to overlap with a third time period in which reception of the downlink signal is not available, or
wherein in the case that a specific time period for the first time period overlaps with the third time period, the first time period is identified as the specific time period with the third time period excluded, and the measurement report is transmitted in case that a transition occurs from the third time period to the second time period, or
wherein in the case that the specific time period overlaps with the third time period, the first time period is reserved while the specific time period overlaps with the third time period, and includes at least a portion of the second time period transitioned during the third time period.

11. The terminal of claim 10, wherein the second time period is an active time of cell discontinuous transmission (DTX), the third time period is a non-active time of the cell DTX, and the cell DTX is activated by dynamic signaling.

12. The terminal of claim 7, wherein the downlink signal is a downlink signal of the first cell, and the event is configured for the first cell,
wherein, during a time period within the first time period in which reception of a downlink signal from the first cell is not available, the event configured for the first cell is based on measurement of a downlink signal from a second cell different from the first cell, and
wherein the first cell and the second cell are included in the same cell group (CG).

13. A method performed by a base station in a communication system, the method comprising:
transmitting configuration information associated with a measurement report; and
receiving the measurement report,
wherein receiving the measurement report is related to an event that triggers the measurement report having been satisfied during a first time period,
wherein the event is associated with a downlink signal,
wherein the first time period is based on the configuration information, and
wherein in the case that information associated with a second time period in which transmission of the downlink signal is available is transmitted, the first time period is included in the second time period.

14. The method of claim 13, wherein the downlink signal is a downlink signal of the first cell, and the event is configured for the first cell,
wherein, during a time period within the first time period in which transmission of a downlink signal from the first cell is not available, the event configured for the first cell is based on measurement of a downlink signal from a second cell different from the first cell, and
wherein the first cell and the second cell are included in the same cell group (CG).

15. A base station of a communication system, the base station comprising:
a transceiver; and
a processor connected to the transceiver,
wherein the processor is configured to:
transmit configuration information associated with a measurement report; and
receive the measurement report,
wherein receiving the measurement report is related to an event that triggers the measurement report having been satisfied during a first time period,
wherein the event is associated with a downlink signal,
wherein the first time period is based on the configuration information, and wherein in the case that information associated with a second time period in which transmission of the downlink signal is available is transmitted, the first time period is included in the second time period.
